# EUROPEAN PATENT APPLICATION

(11) **EP 2 955 329 A1**
(43) Date of publication of application: **16.12.2015**
(21) Application number: 15171124.9
(22) Date of filing: 09.06.2015
(51) Int. Cl.: F01D 5/34, B23P 15/00

(54) **INTEGRALLY FORMED ROTOR ASSEMBLY WITH SHAFT AND BLISKS**

(30) Priority: 09.06.2014 US 201414299411
(71) Applicant: General Electric Company, Schenectady, NY 12345 (US)
(72) Inventor: HOFER, Douglas Carl, Niskayuna, NY New York 12309 (US); LUO, Yuanfeng, Niskayuna, NY New York 12309 (US); SEVINCER, Edip, Niskayuna, NY New York 12309 (US); KRISHNAMOORTHY, Ganesh, Shoreline, WA Washington 98133 (US); KARLA, Chiranjeev Singh, Niskayuna, NY New York 12309 (US)
(74) Representative: Lee, Brenda

(57) **Abstract**

A rotor assembly (200) is provided. The rotor assembly includes a rotor shaft (206) and at least one blisk (210) integrally formed with the rotor shaft. The at least one blisk includes an inner rim (214) extending circumferentially about the rotor shaft, and a plurality of blades (216) extending radially outward from the inner rim, wherein the rotor shaft and the at least one blisk are defined from a single billet (302) of material.

## Description

### BACKGROUND

The present disclosure relates generally to turbine engines and, more specifically, to a monolithic axial turbine rotor including one or more integrally formed blisks.

At least some known axial flow turbine engines include a rotor shaft and at least one turbine stage coupled to the rotor shaft. At least some known stages include a disk and circumferentially-spaced apart rotor blades that extend radially outward from the disk. Each rotor blade includes an airfoil and a dovetail at its root where the dovetail is radially retained in a complementary slot in a perimeter of the disk. During operation, the disk and blades attached thereto rotate such that the blades develop a centrifugal force, which acts on the respective dovetails and the disk. Other known stages include the rotor blades integrally manufactured with the disk as a one-piece component conventionally known as a blisk (i.e., bladed disk). The blisks are then coupled to the rotor shaft with a central tie bolt or a Hirth coupling, for example, to achieve torque transmission between the blisks and the rotor shaft, or between adjacent blisks.

Recently, the use of high power density working fluids, such as supercritical carbon dioxide (CO₂), is being explored as a potential working fluid for use with axial flow turbine engines. The use of high power density working fluids generally enables axial flow turbine engines to operate at increased rotational speeds. As such, smaller turbine engines utilizing high power density working fluids can produce similar power outputs relative to comparatively larger turbine engines utilizing conventional working fluids. However, operating turbine engines with increased power density presents challenges relating to torque transmission for traditional mechanisms that couple turbine stages to rotor shafts.

### BRIEF DESCRIPTION

In one aspect, a rotor assembly is provided. The rotor assembly includes a rotor shaft and at least one blisk integrally formed with the rotor shaft. The at least one blisk includes an inner rim extending circumferentially about the rotor shaft, and a plurality of blades extending radially outward from the inner rim, wherein the rotor shaft and the at least one blisk are defined from a single billet of material.

In another aspect, a power generation system is provided. The power generation system includes a source of working fluid and a turbine coupled downstream from the source of working fluid. The turbine includes a casing including a central axis and a rotor assembly positioned within the casing. The rotor assembly includes a rotor shaft extending substantially coaxially with the central axis and at least one blisk integrally formed with the rotor shaft. The at least one blisk includes an inner rim extending circumferentially about the rotor shaft and a plurality of rotor blades extending radially outward from the inner rim, wherein the rotor shaft and the at least one blisk are defined from a single billet of material.

In yet another aspect, a method of manufacturing a rotor assembly is provided. The method includes providing a solid billet of material, defining a rotor shaft from the solid billet of material, defining an inner rim from the solid billet of material, the inner rim extending circumferentially about the rotor shaft, and defining a plurality of rotor blades from the solid billet of material, the plurality of rotor blades extending radially outward from the inner rim.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of an exemplary power generation system;
FIG. 2 is a schematic illustration of an exemplary turbine that may be used with the power generation system shown in FIG. 1;
FIG. 3 is a perspective view of an exemplary rotor assembly that may be used with the turbine shown in FIG. 2;
FIG. 4 is a schematic illustration of an alternative turbine that may be used with the power generation system shown in FIG. 1; and
FIG. 5 is a schematic flow diagram illustrating an exemplary sequence of process steps of manufacturing the rotor assembly shown in FIG. 3.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

Embodiments of the present disclosure relate to rotor assemblies operable with a working fluid. In the exemplary embodiment, the rotor assembly includes a rotor shaft and at least one blisk that are each formed from a single billet of material. Specifically, the single billet of material is machined to a predetermined shape such that the rotor assembly is a unitary monolithic structure. As such, the need for traditional mechanisms that couple turbine stages to rotor shafts and/or that couple adjacent blisks together is eliminated. Moreover, the rotor assembly described herein facilitates increasing a power output of known turbine engines, and/or facilitates reducing a size of turbine engines that produce similar power outputs as larger counterparts.

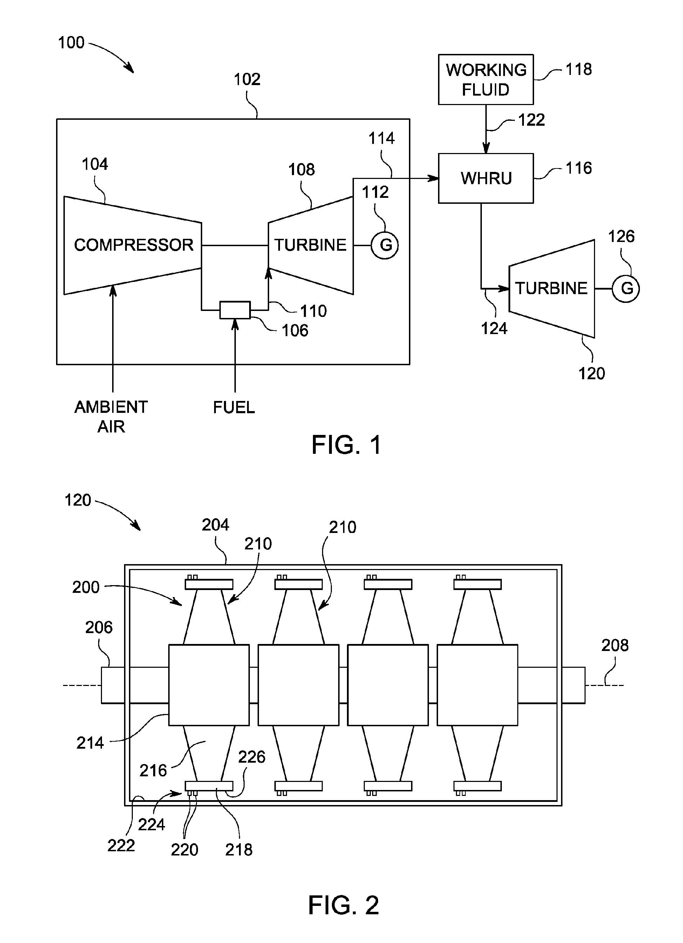

FIG. 1 is a schematic illustration of an exemplary power generation system 100. Power generation system 100 includes a gas turbine engine assembly 102 that includes a compressor 104, a combustor 106, and a first turbine 108 powered by expanding a flow of hot gas 110 produced in combustor 106 for driving a first electrical generator 112. A flow of exhaust gas 114 is channeled from turbine 108 towards a waste heat recovery unit (WHRU) 116 that recovers waste heat from exhaust gas 114. Power generation system 100 also includes a working fluid source 118 coupled in flow communication with WHRU 116, and a second turbine 120 coupled downstream from WHRU 116. A flow of working fluid 122 is channeled towards WHRU 116 and, in one embodiment, waste heat from exhaust gas 114 facilitates heating working fluid 122 to a supercritical state. Alternatively, working fluid 122 channeled towards WHRU 116 is in a supercritical state prior to entering WHRU 116. A flow of supercritical working fluid 124 is then channeled towards second turbine 120, which is powered by expanding the flow of supercritical working fluid 124 for driving a second electrical generator 126.

Working fluid 122 is any working fluid that enables power generation system 100 to function as described herein. Exemplary working fluids include, but are not limited to, carbon dioxide and steam. In an alternative embodiment, working fluid 122 may be heated by any heat source that enables power generation system 100 to function as described herein and may be in a non-supercritical state. For example, working fluid 122 may be heated by nuclear energy or concentrated solar energy.

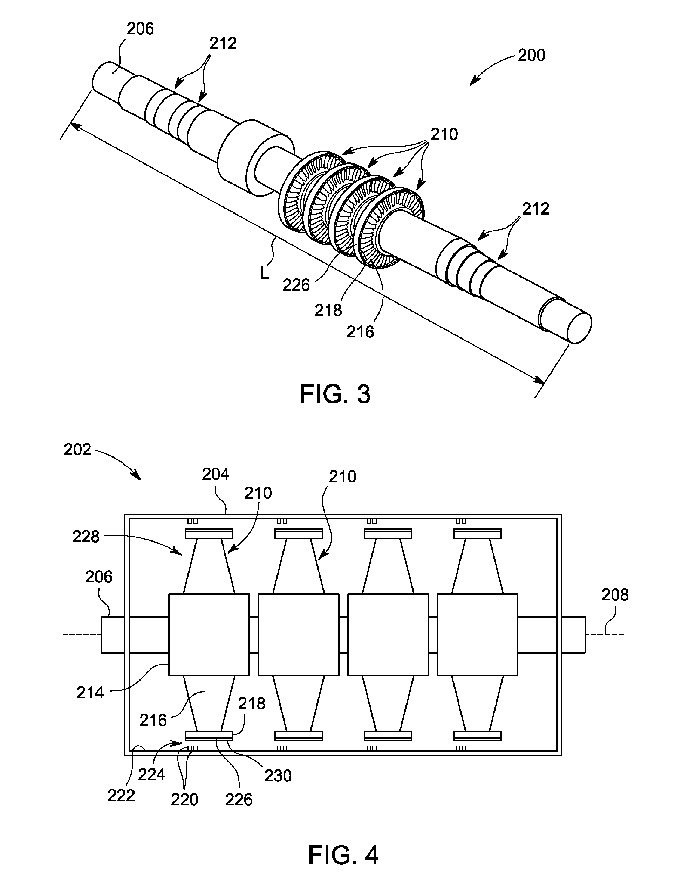

FIG. 2 is a schematic illustration of second turbine 120, FIG. 3 is a perspective view of an exemplary rotor assembly 200 for use with second turbine 120, and FIG. 4 is a schematic illustration of an alternative second turbine 202. In the exemplary embodiment, second turbine 120 includes a casing 204 and rotor assembly 200 is positioned within casing 204. Rotor assembly 200 includes a rotor shaft 206 extending substantially coaxially with a central axis 208 of casing 204, and at least one blisk 210 integrally formed with rotor shaft 206. Blisks 210 are axially spaced along a length L of rotor shaft 206. Moreover, rotor shaft 206 includes a plurality of stepped portions 212 sized to receive and to restrict movement of journal bearings (not shown) along rotor shaft 206. In an alternative embodiment, a plurality of stationary rotor blades are coupled to casing 204 and positioned between adjacent blisks 210 along length L.

Each blisk 210 includes an inner rim 214 extending circumferentially about rotor shaft 206, and a plurality of rotor blades 216 extending radially outward from inner rim 214. Rotor blades 216 has any cross-sectional shape that enables rotor assembly 200 to function as described herein. For example, in the exemplary embodiment, rotor blades 216 have a substantially airfoil cross-sectional shape that enables blisks 210 to be operable with the flow of supercritical working fluid 124 (shown in FIG. 1). Alternatively, rotor blades 216 have a cross-sectional shape that enables rotor assembly 200 to be operable with working fluids such as liquids. As such, in one embodiment, rotor assembly 200 is configured for use with mechanical devices including liquid pumps, for example.

Each blisk 210 also includes a shroud 218 integrally coupled to each of the plurality of rotor blades 216, and seal teeth 220 extending radially outward from shroud 218. Seal teeth 220 extend towards a radially inner surface 222 of casing 204 to facilitate reducing a clearance 224 between a radially outer surface 226 of shroud 218 and casing 204. As will be described in more detail below, rotor assembly 200 and its associated components and features are defined from a single billet (not shown in FIGs. 2-4) of material.

Referring to FIG. 4, second turbine 202 includes an alternative rotor assembly 228. Specifically, seal teeth 220 are coupled to radially inner surface 222 of casing 204 and extend radially inward from casing 204 towards shroud 218 of rotor assembly 228. Moreover, shroud 218 includes at least one layer 230 of an abradable coating applied to radially outer surface 226 of shroud 218. The abradable coating facilitates reducing damage to shroud 218 from contact with seal teeth 220 during operation of rotor assembly 200. In an alternative embodiment, the abradable coating is applied to radially inner surface 222 of casing 204.

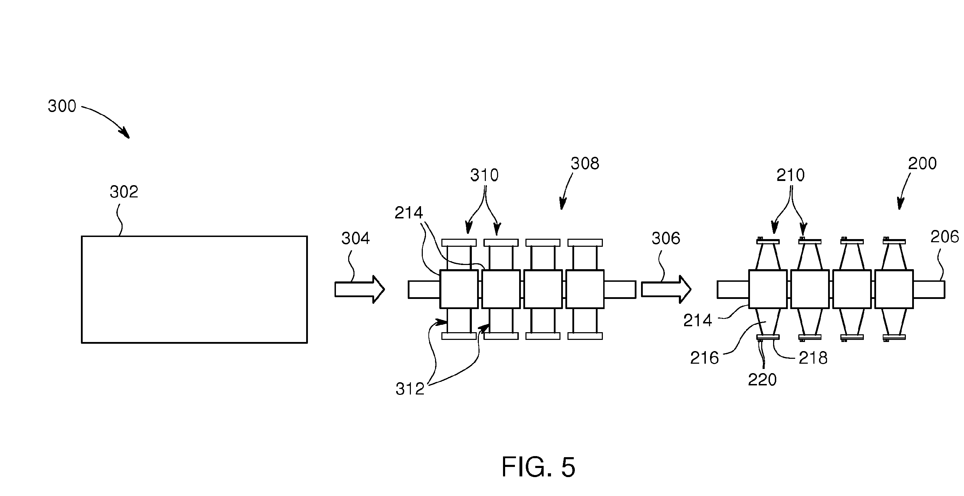

FIG. 5 is a schematic flow diagram illustrating an exemplary sequence 300 of process steps for use in manufacturing rotor assembly 200 (or rotor assembly 228). In the exemplary embodiment, rotor assembly 200 is manufactured from a single cylindrical billet 302 of material. Billet 302 is forged or cast from any material that enables rotor assembly 200 to function as described herein. For example, billet 302 is formed from a material that enables rotor assembly 200 to be repaired and returned to service without having to be replaced in its entirety. Rotor shaft 206 and each blisk 210 are subsequently defined using any suitable material removal method, including, but not limited to, computer numerical control ("CNC") milling, turning, electro-chemical machining ("ECM"), and electrical discharge machining ("EDM").

For example, in the exemplary embodiment, sequence 300 includes a first material removal step 304 and a second material removal step 306. In each of first and second material removal steps 304 and 306, material is removed using any of the above-mentioned material removal methods. First material removal step 304 includes removing material from billet 302 to form an intermediate rotor assembly 308. Specifically, material is removed from billet 302 in a process such as turning or milling such that rotor shaft 206 and initial blisks 310 are defined therefrom. Initial blisks 310 include inner rim 214 and an outer rim 310 extending therefrom.

Second material removal step 306 includes removing material from intermediate rotor assembly 308 to facilitate forming rotor assembly 200. Specifically, material is removed from outer rim 312 in a process such as ECM and/or EDM to facilitate defining rotor blades 216, shroud 218, and seal teeth 220, respectively. As such, manufacturing rotor assembly 200 from billet 302 enables each blisk 210 to be integrally coupled to rotor shaft 206. In an alternative embodiment, rotor assembly 200 is formed using additive manufacturing techniques and post-polishing methods such that rotor shaft 206 and blisks 210 are integrally formed together.

The assembly and methods described herein relate to rotor assemblies operable with high power density working fluids. Specifically, the rotor assembly described herein is either manufactured from a single billet of material, or manufactured via additive manufacturing techniques such that the rotor assembly is a unitary monolithic structure. As such, the rotor assembly is manufactured to include features, such as an integral shroud and seal teeth, that facilitate increasing the efficiency of associated turbine engines. Moreover, the rotor assembly is manufactured to be operable with any suitable working fluid.

An exemplary technical effect of the assemblies and methods described herein includes at least one of: (a) enabling the use of high power density working fluids in axial flow turbine engines; (b) increasing the efficiency of turbine engines using high power density working fluids; and (c) eliminating the need for additional couplings between turbine stages and rotor shafts and/or between adjacent turbine stages.

Exemplary embodiments of the rotor assembly are described above in detail. The assembly is not limited to the specific embodiments described herein, but rather, components of systems and/or steps of the methods may be utilized independently and separately from other components and/or steps described herein. For example, the rotor assembly described herein may also be used in combination with other processes, and is not limited to practice with only turbine engines and related methods as described herein. Rather, the exemplary embodiment can be implemented and utilized in connection with many applications where a rotor assembly is operable with a working fluid.

Although specific features of various embodiments of the present disclosure may be shown in some drawings and not in others, this is for convenience only. In accordance with the principles of embodiments of the present disclosure, any feature of a drawing may be referenced and/or claimed in combination with any feature of any other drawing.

This written description uses examples to disclose the embodiments of the present disclosure, and also to enable any person skilled in the art to practice embodiments of the present disclosure, including making and using any devices or systems and performing any incorporated methods. The patentable scope of the embodiments described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A rotor assembly (200) comprising:
a rotor shaft (206); and
at least one blisk (210) integrally formed with said rotor shaft, said at least one blisk comprising:
an inner rim (214) extending circumferentially about said rotor shaft; and
a plurality of blades (216) extending radially outward from said inner rim, wherein said rotor shaft and said at least one blisk are defined from a single billet (302) of material.

2. The rotor assembly (200) in accordance with Claim 1, wherein said at least one blisk (210) further comprises a shroud (218) coupled to said plurality of blades, said shroud defined from the single billet (302) of material.

3. The rotor assembly (200) in accordance with Claim 2, further comprising a plurality of seal teeth (220) extending radially outward from said shroud (218), said seal teeth defined from the single billet (302) of material.

4. The rotor assembly (200) in accordance with Claim 2 or Claim 3, further comprising at least one layer (230) of an abradable coating applied to a radially outer surface (226) of said shroud (218).

5. A power generation system (100) comprising:
a source of working fluid (118); and
a turbine (202) coupled downstream from said source of working fluid, said turbine comprising:
a casing (204) comprising a central axis (208); and
a rotor assembly (200) positioned within said casing, said rotor assembly comprising:
a rotor shaft (206) extending substantially coaxially with the central axis; and
at least one blisk (210) integrally formed with said rotor shaft, said at least one blisk comprising:
an inner rim (214) extending circumferentially about said rotor shaft; and
a plurality of rotor blades (216) extending radially outward from said inner rim, wherein said rotor shaft and said at least one blisk are defined from a single billet (302) of material.

6. The system (100) in accordance with Claim 5, wherein said at least one blisk (210) further comprises a shroud (218) coupled to said plurality of rotor blades (216), said shroud defined from the single billet (302) of material.

7. The system (100) in accordance with Claim 6, further comprising a plurality of seal teeth (220) extending radially outward from said shroud (218), said seal teeth defined from the single billet (302) of material.

8. The system (100) in accordance with Claim 5, 6 or 7, further comprising a plurality of seal teeth (220) coupled to said casing (204) and extending radially inward towards said rotor assembly (200).

9. The system (100) in accordance with any of Claims 5 to 8, wherein said source of working fluid (118) comprises a source of carbon dioxide.

10. The system (100) in accordance with any of Claims 5 to 9, further comprising a heat recovery unit (116) coupled in flow communication with said source of working fluid (118), said heat recovery unit configured to heat the working fluid to a supercritical state.
